# EUROPÄISCHE PATENTSCHRIFT

(11) **EP 2 522 557 B1**
(45) Veröffentlichungstag und Bekanntmachung des Hinweises auf die Patenterteilung: **02.04.2014**
(21) Anmeldenummer: 12166931.1
(22) Anmeldetag: 07.05.2012
(51) Int. Cl.: B60S 9/02, B66C 23/80, E02F 9/00

(54) **Stützvorrichtung für Nutzfahrzeuge und Verfahren zur Herstellung einer Stützvorrichtung für Nutzfahrzeuge**
Support device for commercial vehicles and method for producing a support device for commercial vehicles
Dispositif d'appui pour véhicules utilitaires et procédé de fabrication d'un dispositif d'appui pour véhicules utilitaires

(30) Priorität: 12.05.2011 DE 102011075761
(43) Veröffentlichungstag der Anmeldung: 14.11.2012
(73) Patentinhaber: SAF-HOLLAND GmbH, 63856 Bessenbach (DE)
(72) Erfinder: Wallmeier, Stefan, 63773 Goldbach (DE); Weber, Elmar, 48249 Dülmen (DE)
(74) Vertreter: Müller Schupfner & Partner

(56) Entgegenhaltungen:
- JP-A- 58 174 052
- US-A- 3 751 067

## Beschreibung

Die vorliegende Erfindung betrifft Stützvorrichtung für Nutzfahrzeuge gemäß dem Oberbegriff des Anspruchs 1 sowie ein Verfahren zur Herstellung einer Stützvorrichtung für Nutzfahrzeuge gemäß dem Oberbegriff des unabhängigen Anspruchs 9. Stützvorrichtungen für Nutzfahrzeuge, insbesondere Stützvorrichtungen, die dazu dienen, einen Sattelauflieger abzustützen, wenn dieser nicht an der Zugmaschine befestigt ist, sind aus dem Stand der Technik hinlänglich bekannt. Dabei nimmt diese Stützvorrichtung insbesondere einen Teil der Gewichtskraft des Sattelaufliegers auf und leitet diese an den Boden, auf dem sie sich abstützt, weiter. Problematisch und aufwendig ist bei derartigen Stützvorrichtungen jedoch die Montage, insbesondere die Montage einer Fußeinheit an dem Stützelement der Stützvorrichtung. Dabei wird eine Vielzahl kleiner Bauteile wie Schrauben, Bolzen, Wellen und /oder Sicherungselemente benötigt und die Montage der Stützvorrichtung stellt daher einen erheblichen Kosten- und Zeitaufwand dar.

Die US-3,751,067 betrifft eine Stützvorrichtung für einen Sattelanhänger mit einem Stützelement, an dessen unterem Ende ein Fußelement vorgesehen ist, welches über ein Tragelement schwenkbar an dem Stützelement festgelegt ist.

Es ist also Aufgabe der vorliegenden Erfindung, eine Stützvorrichtung, welche auf einfache Weise montiert und wieder demontiert werden kann und ein Verfahren zur Herstellung einer solchen Stützvorrichtung bereitzustellen.

Diese Aufgabe wird gelöst mit einer Stützvorrichtung mit den Merkmalen des Anspruchs 1 sowie einem Verfahren zur Herstellung einer Stützvorrichtung mit den Merkmalen des Anspruchs 9. Weitere Vorteile und bevorzugte Ausführungsformen ergeben sich aus den abhängigen Ansprüchen.

Erfindungsgemäß umfasst die Stützvorrichtung ein erstes Stützelement, eine Fußeinheit, ein Sicherungselement und ein Tragelement, wobei die Fußeinheit einen Aufnahmebereich aufweist, wobei das Tragelement an dem Stützelement festlegbar oder festgelegt ist, wobei das Tragelement zumindest teilweise in den Aufnahmebereich einführbar und lagerbar ist und wobei das Sicherungselement eine Aussparung aufweist, mit der es über das erste Stützelement schiebbar und entlang des Stützelements verlagerbar ist, so dass ein Betriebszustand des Sicherungselements einstellbar ist, in welchem es die Fußeinheit und das erste Stützelement umfasst. Das erste Stützelement ist bevorzugt ein sich länglich erstreckender Körper, der an einem seiner Enden, bevorzugt an dem unteren Ende, einen Bereich aufweist, in welchem die Fußeinheit an dem ersten Stützelement festlegbar ist. Insbesondere bevorzugt ist das erste Stützelement ein rohrförmiger bzw. hohlkörperförmiger Körper mit polygonalem oder rundem, insbesondere kreisrundem Querschnitt. Um die Fußeinheit an dem ersten Stützelement festzulegen, ist ein Tragelement vorgesehen, das vorteilhaft an dem ersten Stützelement festlegbar ist und an dem ein Aufnahmebereich an der Fußeinheit festlegbar ist. Dabei kann das Tragelement bevorzugt ein Bolzen bzw. ein zylinderförmiger Körper sein, welcher durch am ersten Stützelement vorgesehene Aussparungen gesteckt wird und an beiden Seiten des ersten Stützelementes dessen Seitenwände überragt, so dass ein wellenstummelförmiger Bereich am Tragelement verbleibt, an welchem der Aufnahmebereich der Fußeinheit festgelegt werden kann. In einer weiteren bevorzugten Ausführungsform ist das Tragelement einstückig mit dem ersten Stützelement ausgeführt, so z.B. als an das Stützelement geschmiedetes Rohrstück bzw. Zylinderstück. Das Sicherungselement weist erfindungsgemäß eine Aussparung auf, wobei die Aussparung groß genug ist, um das Sicherungselement über das erste Stützelement zu stülpen. Das Sicherungselement ist bevorzugt plattenförmig oder zumindest bereichsweise plattenförmig ausgebildet, d.h. seine Erstreckung in einer Ebene überwiegt die Erstreckung senkrecht zu dieser Ebene deutlich. Besonders bevorzugt ist das Sicherungselement ein Blechteil, welches beispielsweise durch die Arbeitsschritte Pressen, Stanzen und/oder Tiefziehen hergestellt wird. In einem bestimmten Betriebszustand kann das Sicherungselement die Fußeinheit, welche am ersten Stützelement festgelegt ist, und das erste Stützelement umgreifen bzw. umschließen bzw. umfassen. In der Regel wird das Sicherungselement dabei durch die Schwerkraft in diesem Betriebszustand bzw. in dieser Position relativ zum ersten Stützelement gehalten und sichert in diesem Betriebszustand die Fußeinheit am ersten Stützelement.

In einer besonders bevorzugten Ausführungsform weist die Fußeinheit einen sich im Wesentlichen quer zu einer Schwenkebene erstreckenden Basisbereich und einen sich im Wesentlichen in der Schwenkebene erstrenkenden Wandbereich auf, wobei der Wandbereich mit einem ersten Ende am Basisbereich festlegbar ist und wobei ein dem ersten Ende gegenüberliegendes freies Ende des Wandbereiches relativ zum ersten Ende, quer zur Schwenkebene verlagerbar ist, so dass der am Wandbereich angeordnete Aufnahmebereich mit dem Tragelement in Eingriff bringbar ist. Als Schwenkebene wird bevorzugt eine vertikal im Raum stehende Ebene bezeichnet, in der das erste Stützelement relativ zur Fußeinheit schwenkbar an der Fußeinheit gelagert ist. Mit Blick auf die Verwendung der Stützvorrichtung an einem Nutzfahrzeug, insbesondere an einem Sattelauflieger ist die Schwenkebene bevorzugt eine Ebene, die sich längs des Sattelaufliegers und vertikal erstreckt. Der Basisbereich der Fußeinheit erstreckt sich im Wesentlichen quer zur Schwenkebene bzw. bevorzugt senkrecht zur Schwenkebene. Besonders bevorzugt erstreckt sich der Basisbereich in einer Ebene, die senkrecht zur Schwenkebene steht, wobei der Basisbereich bevorzugt ein plattenförmiger, beispielsweise rechteckiger oder insbesondere quadratischer Körper ist. Am Basisbereich festgelegt oder schwenkbar festgelegt ist ein Wandbereich, welcher sich in der Schwenkebene erstreckt, wobei der Wandbereich im Ruhezustand bevorzugt senkrecht zum Basisbereich angeordnet ist. Der Wandbereich ist mit einer Kante bzw. Fläche bevorzugt an seiner Unterseite mit dem Basisbereich verbunden und weist dieser ersten Kante oder Fläche gegenüberliegend ein freies Ende auf, welches quer zur Schwenkebene und relativ zum Basisbereich verlagert werden kann. Auf vorteilhafte Weise können der Basisbereich und der Wandbereich einstückig ausgeführt sein, wobei die beiden Bereiche beispielsweise durch Abkanten eines Bleches hergestellt sein können. Die Verlagerung des freien Endes des Wandbereiches geschieht in diesem bevorzugten Fall bevorzugt durch Verbiegen des Wandbereiches, wobei dieses Verbiegen bevorzugt im elastischen Bereich stattfindet, so dass aufgrund der elastischen Rückstellkraft des Materials des Wandbereiches und des Basisbereiches der Wandbereich wieder in seine Ursprungs- bzw. Ruhelage zurückstrebt. Bevorzugt kann diese Wiege- bzw. Schwenkbewegung des Wandbereiches relativ zum Basisbereich genutzt werden, um den Wandbereich im verformten Zustand an einem Tragelement anzuordnen und anschließend die elastische Rückstellkraft wirken zu lassen, um den am Wandbereich angeordneten Aufnahmebereich mit dem Tragelement in Eingriff zu bringen. Es ist weiterhin bevorzugt, dass der Wandbereich Abschnitte aufweist, die einer leichteren Verformbarkeit dienen. So kann z.B. eine geschwungene oder bogenförmige Querschnittsgeometrie des Wandbereiches den Hebelarm bei einer Verbiegung des Wandbereiches vergrößern und so die für eine ausreichende Verformung des Wandbereiches notwendige Kraft verringern.

Bevorzugt weist das Sicherungselement eine Aussparung auf, deren Geometrie zumindest bereichsweise kongruent zur Querschnittsgeometrie des Verbundes aus erstem Stützelement und/oder Tragelement und/oder Wandbereich der Fußeinheit ist, wobei das Sicherungselement entlang des ersten Stützelements verlagerbar ist, bis es an einer dafür vorgesehenen Körperkante oder -fläche am Tragelement und/oder Fußeinheit zum Anliegen kommt. Bevorzugt ist die Aussparung des Sicherungselements also derart gestaltet, dass das Sicherungselement in einem ersten Betriebszustand zum einen die Fußeinheit und das erste Stützelement bzw. eventuell auch das Tragelement umgibt, wobei das Sicherungselement besonders bevorzugt gleichzeitig in diesem Betriebszustand die Wandbereiche der Fußeinheit gegen Relativbewegung zueinander sichert. Besonders vorteilhaft ist es, wenn einer der Wandbereiche der Fußeinheit in Bewegungsrichtung des Sicherungselementes entlang des ersten Stützelementes hin zur Fußeinheit einen zunehmenden Querschnitt bzw. eine zunehmende Breite aufweist. Bevorzugt kann für diese Querschnittsvergrößerung des Wandbereiches ein trapezförmiger Wandbereich oder beispielsweise ein halbkugelförmiger Wandbereich vorgesehen sein. Die Aussparung des Sicherungselementes ist dabei so auszulegen, dass sie zumindest im Bereich, in dem sie am Wandbereich oder dem Tragelement zum Anliegen kommen soll, eine geringere Erstreckung aufweist, als der Wandbereich oder das Tragelement in seinem Punkt der maximalen Erstreckung in dem korrespondierenden Bereich. Bewegt man nun das Sicherungselement entlang des ersten Stützelementes hin zur Fußeinheit, so wird das Sicherungselement in einer bestimmten Höhe oberhalb des Basisbereichs der Fußeinheit an der Körperkante oder -fläche des Wandbereiches oder des Tragelements zum Anliegen kommen. Besonders bevorzugt ist es, wenn in diesem Betriebspunkt oder in dieser Bauposition des Sicherungselementes relativ zur Fußeinheit das Sicherungselement gleichzeitig auch das Tragelement gegen Verlagerung quer zur Schwenkebene sichert. Die bevorzugte Hauptfunktion des Sicherungselements ist dabei, das freie Ende des Wandbereiches gegen Verbiegung bzw. Schwenkbewegung weg vom Stützelement zu sichern und auf diese Weise zu gewährleisten, dass der Aufnahmebereich des Wandbereiches in Kontakt mit dem Tragelement bleibt. In weiteren bevorzugten Ausführungsformen kann das Sicherungselement auch eine Geometrie aufweisen bzw. die Aussparung des Sicherungselementes eine Geometrie aufweisen, die bevorzugt an einer Körperkante oder -fläche des Tragelementes zum Anliegen kommt, wobei in dieser Einbauposition ebenfalls gewährleistet ist, dass das Sicherungselement das freie Ende des Wandbereiches der Fußeinheit gegen Verlagerung weg vom Stützelement sichert. In weiteren bevorzugten Ausführungsformen können am Wandbereich der Fußeinheit oder am Tragelement geeignete Vorsprünge vorgesehen sein, an denen sich das Sicherungselement abstützen kann. Darüber hinaus kann es ebenfalls von Vorteil sein, wenn am Wandbereich der Fußeinheit oder am Tragelement ein Verrastmechanismus vorgesehen ist, in welchem das Sicherungselement in der gewünschten Einbauposition einrastet und somit nicht mehr allein durch die Schwerkraft, sondern auch durch eine formschlüssige Verbindung mit dem Verrastmechanismus gegen Verlagerung entlang des Stützelementes gesichert ist. Ferner bevorzugt ist, dass das erste Stützelement teleskopartig in ein zweites Stützelement ein- und ausschiebbar ist. Dabei ist das zweite Stützelement bevorzugt ein Hohlkörper, wie beispielsweise ein Rohr, weist einen Innendurchmesser auf der groß genug ist, das erste Stützelement aufzunehmen und ist mit seinem vom ersten Stützelement weg weisenden Ende am Nutzfahrzeug festgelegt. Bei dieser Konfiguration ist es besonders vorteilhaft, wenn im eingefahrenen Zustand der beiden Stützelemente, das Sicherungselement vom ersten Stützelement gegen die Fußeinheit gepresst wird, um beispielsweise Schwingungen, bzw. Klappern des Sicherungselements während der Fahrt des Nutzfahrzeuges zu verhindern.

Vorteilhaft ist es, wenn der Aufnahmebereich der Fußeinheit eine Aussparung oder ein Rücksprung ist, der quer zur Schwenkebene in den Wandbereich eingebracht ist. In einer zunächst besonders bevorzugten Ausführungsform ist der Aufnahmebereich der Fußeinheit eine Bohrung, die in den Wandbereich der Fußeinheit eingebracht ist. Insbesondere bevorzugt ist dabei eine kreisförmige Bohrung, wobei auch andere Querschnitte, wie beispielsweise ein polygonaler Querschnitt oder ein elliptischer Querschnitt durchaus bevorzugt sein können. Ist der Querschnitt des Aufnahmebereiches der Fußeinheit ein anderer als der Querschnitt des Tragelementes, so ist bevorzugt ein Adapterelement in den Aufnahmebereich einzusetzen, welches zwischen den verschiedenen Geometrien vermitteln und zumindest bereichsweise mit der Geometrie des Tragelementes an seiner Innenseite und mit der Geometrie des Aufnahmebereiches an seiner Außenseite kongruiert. Alternativ kann der Aufnahmebereich der Fußeinheit auch ein Rücksprung sein, der quer zur Schwenkebene in den Wandbereich eingebracht ist, wobei der Rücksprung tief genug sein muss, um das Tragelement zumindest bereichsweise formschlüssig aufzunehmen und die entsprechenden Kräfte zwischen Tragelement und Aufnahmebereich zu übertragen. Besonders vorteilhaft ist diese Ausführungsform, da durch den verbleibenden Materialsteg des Aufnahmebereiches längs bzw. in der Schwenkebene das Tragelement gegen Verlagerung quer zur Schwenkebene gesichert ist.

In einer ferner bevorzugten Ausführungsform weist das Stützelement an zwei gegenüberliegenden Seiten je ein Tragelement aus, wobei die beiden Tragelemente kollinear zueinander ausgerichtet sind und sich im Wesentlichen quer zur Schwenkebene erstrecken. In dieser bevorzugten Ausführungsform sind an zwei gegenüberliegenden Seiten des ersten Stützelementes zwei Tragelemente festgelegt. Insbesondere ragen diese Tragelemente wellenstummelartig aus dem ersten Stützelement hervor bzw. stehen von diesem ab, besonders bevorzugt senkrecht zur Schwenkebene. In bevorzugter Weise können diese beiden Tragelemente mittels einer Schraubverbindung am ersten Stützelement festgelegt sein, wobei in der Aussparung am ersten Stützelement ein Innengewinde angebracht wird, in welches ein Außengewinde am Tragelement eingreift und auf diese Weise das Tragelement am ersten Stützelement festlegt. Bevorzugt weisen die Tragelemente einen kongruenten Querschnitt auf und sind koaxial, bzw. kollinear zueinander ausgerichtet, damit bei Festlegen der Fußeinheit an den Tragelementen eine Schwenkbewegung der Fußeinheit mit Rotationsmittelpunkt in der gemeinsamen Achse der Tragelemente reibungslos stattfinden kann.

In einer bevorzugten Ausführungsform sichert das Sicherungselement die Wandbereiche der Fußeinheit mittels eines Formschlusses gegen voneinander wegweisende Verlagerung. In dem Betriebszustand, in dem das Sicherungselement die Fußeinheit und bevorzugt auch das Tragelement und das erste Stützelement umgibt, verhindert es besonders bevorzugt, dass die Wandbereiche der Fußeinheit sich voneinander weg bewegen und so die Verbindung zwischen Tragelement und Aufnahmebereich der Fußeinheit gelöst wird. Vorteilhaft sind zu diesem Zweck an der Aussparung im Sicherungselement zwei nach innen weisende Flächen vorgesehen, welche die Wandbereiche abstützen und verhindern, dass diese sich voneinander weg, also quer zur Schwenkebene und weg vom ersten Stützelement bewegen.

Besonders bevorzugt ist es, dass die Fußeinheit zwei Wandbereiche aufweist, die im Wesentlichen parallel zueinander angeordnet sind, wobei die Aufnahmebereiche der Wandbereiche koaxial, bzw. kollinear zueinander ausgerichtet sind und an den gegenüberliegenden Enden eines Tragelementes oder jeweils zweier koaxial, bzw. kollinear angeordneter Tragelemente eingreifen. Bevorzugt sind die beiden Wandbereiche der Fußeinheit vertikal angeordnet, also sie erstrecken sich im Wesentlichen in der Schwenkebene. Dabei ist es von Vorteil, wenn nicht nur die Geometrie der Aufnahmebereiche kongruent oder äußerst ähnlich zueinander ist, sondern auch wenn die Außengeometrie der Wandbereiche größtenteils kongruent ist, damit das Sicherungselement, wenn dieses am Wandbereich der Fußeinheit zum Aufliegen kommt, nicht in eine schräge Position gerät und eventuell verkantet.

In einer bevorzugten Ausführungsform weist die Fußeinheit ein oder eine Vielzahl von Verriegelungsmitteln auf, die das Sicherungselement gegen Verlagerung relativ zur Fußeinheit sichern. Zunächst wird das Sicherungselement bevorzugt durch die Schwerkraft gegen die Fußeinheit gedrückt und an dieser festgelegt. Zur darüber hinaus gehenden Sicherung der Verbindung zwischen Fußeinheit und Stützelement bzw. Tragelement können an der Fußeinheit geeignete Vor- und/oder Rücksprünge vorgesehen sein, in welche das Sicherungselement mit ebenfalls geeigneten Kanten- oder Vor- bzw. Rücksprüngen eingreift und so an der Fußeinheit festlegbar ist. Besonders bevorzugt sind diese Verriegelungsmittel bzw. Verrastmittel in den Wandbereichen der Fußeinheit vorgesehen. Alternativ kann das Sicherungselement bevorzugt auch mittels einer Schraubverbindung, Nietverbindung, Klebverbindung oder Schweißverbindung an den Wandbereichen der Fußeinheit festgelegt sein.

Erfindungsgemäß ist ein Verfahren zur Herstellung einer Stützvorrichtung vorgesehen, welches die folgenden Schritte umfasst: Bereitstellen eines ersten Stützelements einer Fußeinheit und eines oder einer Vielzahl von Tragelementen, Einführen und/oder Festlegen eines oder zweier Tragelemente in das bzw. am ersten Stützelement, Vergrößern des Abstandes der freien Enden zweier an der Fußeinheit vorgesehener Wandbereiche zueinander, Positionieren des Stützelements zwischen den Wandbereichen und Anordnen von Aufnahmebereichen der Wandbereiche kollinear zu den Enden des oder der zwei Tragelemente, Verringern des Abstandes der freien Enden der Wandbereiche zueinander so dass die Aufnahmebereiche mit den Trägerbereichen in Eingriff gelangen und die Wandbereiche der Fußeinheit gegen Verlagerung relativ zum ersten Stützelement sichern und Bereitstellen eines Sicherungselements, das eine Aussparung aufweist, mit der es über das erste Stützelement geschoben und entlang des ersten Stützelements verlagert ist, so dass ein Betriebszustand des Sicherungselements eingestellt ist, in welchem es die Fußeinheit und das erste Stützelement umfasst bzw. umgibt. Eine bevorzugte Aufgabe des Verfahrens ist also die Herstellung einer Verbindung zwischen der Fußeinheit und dem ersten Stützelement, wobei die Fußeinheit gesichert gegen Verlagerung und drehbar über ein Tragelement oder zwei Tragelemente am Stützelement festgelegt sein soll. Erfindungsgemäß wird die Fußeinheit gegenüber Verlagerung relativ zum Stützelement bzw. zu dem einen oder den zwei Tragelementen durch einen Formschluss zwischen einem Aufnahmebereich an der Fußeinheit und dem Tragelement bzw. von einem Formschluss zwischen Tragelement und Stützelement verhindert. Um den Formschluss herzustellen, muss der Aufnahmebereich der Fußeinheit bevorzugt quer zu einer Schwenkebene an das Tragelement bzw. an das aus dem Stützelement hervorragende Ende des Tragelementes herangeführt und über das Tragelement übergestülpt werden. Mit dem ersten Verfahrensschritt, dem Einführen und/oder Festlegen eines oder zweier Tragelemente in das erste Stützelement wird also ein Formschluss zwischen Tragelement und Stützelement hergestellt, wobei entweder ein Tragelement durch zwei am Stützelement vorgesehene Bohrungen durch das Stützelement hindurch geführt werden kann oder zwei Tragelemente koaxial, bzw. kollinear zueinander ausgerichtet in die Außenwand in vorgesehene Bohrungen des Stützelementes eingeschraubt werden können. In einem zweiten Schritt werden zwei an der Fußeinheit vorgesehene Wandbereiche voneinander beabstandet, bzw. der Abstand ihrer freien Enden zueinander wird vergrößert, so dass der Abstand zwischen zwei an den Wandbereichen vorgesehenen Aufnahmebereichen groß genug ist, um den Verbund aus Stützelement und Tragelement zwischen den beiden Aufnahmebereichen anzuordnen. Das Vergrößern des Abstandes der freien Enden der Wandbereiche der Fußeinheit kann dabei durch Aufbringen einer Kraft geschehen, welche die Wandbereiche elastisch verformt und so den Abstand der beiden Aufnahmebereiche voneinander vergrößert. Alternativ können die Wandbereiche auch in einer Gelenklagerung, beispielsweise einem Scharnier, an einem Basisbereich der Fußeinheit festgelegt sein. Nachdem die Aufnahmebereiche der Fußeinheit kollinear zu den Enden des einen oder der zwei Tragelemente ausgerichtet sind, kann durch Wegnehmen der Kraft an den Wandbereichen der Fußeinheit der Abstand der freien Enden der Wandbereiche voneinander wieder verringert werden, so dass die Aufnahmebereiche mit dem Tragelement in Eingriff gelangen. Hierfür wird die rückstellende Kraft bzw. die Federkraft des Herstellungsmaterials der Fußeinheit bzw. der Wandbereiche genutzt, wobei diese selbsttätig die Wandbereiche wieder aufeinander zu bewegt und in dieser Position sichert. Die zwischen Fußeinheit und Tragelementen hergestellte Verbindung ist eine lösbare Verbindung, d. h. sie kann unter Umkehr der hier beschriebenen Verfahrensschritte auf einfache Weise wieder gelöst werden, indem eine Kraft an den Enden der Wandbereiche angelegt wird, so dass diese sich voneinander weg bewegen, anschließend kann die Fußeinheit wieder von den Tragelementen entfernt werden.

Bevorzugt wird bei dem Verfahren zur Herstellung einer Stützvorrichtung außerdem ein Sicherungselement bereitgestellt, wobei vor dem Festlegen des einen oder der zwei Tragelemente das erste Stützelement in einer Aussparung am Sicherungselement eingeführt wird und das Sicherungselement längs des ersten Stützelementes so weit verlagert wird, bis die Aufnahmebereiche der Wandbereiche an dem oder den Tragelementen festlegbar sind und wobei nach dem Verringern des Abstands der Wandbereiche zueinander das Sicherungselement hin zur Fußeinheit verlagert wird, bis es an der Fußeinheit und/oder dem Tragelement zum Anliegen kommt. Bevorzugt ist also, dass vor dem Festlegen der Fußeinheit am Sicherungselement bzw. an den Tragelementen ein Sicherungselement über das Stützelement gestülpt wird und so weit entlang des ersten Stützelementes verlagert wird, bis es außerhalb des Bereiches ist, in dem im nächsten Verfahrensschritt die Aufnahmebereiche der Fußeinheit mit den Tragelementen zum Eingriff gelangen. Nach Herstellen des Formschlusses zwischen den Aufnahmebereichen der Fußeinheit und dem oder den Tragelementen wird das Sicherungselement in entgegen gesetzter Richtung entlang des ersten Stützelementes, also hin zur Fußeinheit, verlagert, bis es an der Fußeinheit oder an den Tragelementen vorgesehenen Flächen oder Kanten anstößt und an diesen zum Anliegen kommt. Neben der rückstellenden Kraft der Wandbereiche der Fußeinheit stellt also das Sicherungselement eine weitere Absicherung dar, die verhindert, dass sich die formschlüssige Verbindung zwischen Fußeinheit und den Tragelementen bzw. dem ersten Stützelement löst.

Weitere Vorteile und Merkmale ergeben sich aus der nachfolgenden beispielhaften Beschreibung einer bevorzugten Ausführungsform der erfindungsgemäßen Stützvorrichtung mit Bezug auf die beigefügten Figuren. Unterschiedliche Merkmale verschiedener Ausführungsbeispiele können im Rahmen der Erfindung miteinander kombiniert werden. Es zeigen:
- Fig. 1: eine bevorzugte Ausführungsform der erfindungsgemäßen Stützvorrichtung,
- Fig. 2: eine Ansicht einer bevorzugten Ausführungsform der erfindungsgemäßen Stützvorrichtung senkrecht zur Schwenkebene,
- Fig. 3a) und b): zwei perspektivische Ansichten einer bevorzugten Ausführungsform der erfindungsgemäßen Stützvorrichtung, insbesondere bei verschiedenen Betriebszuständen des Sicherungselementes, und
- Fig. 4: eine bevorzugte Ausführungsform der Fußeinheit und des Sicherungselementes.

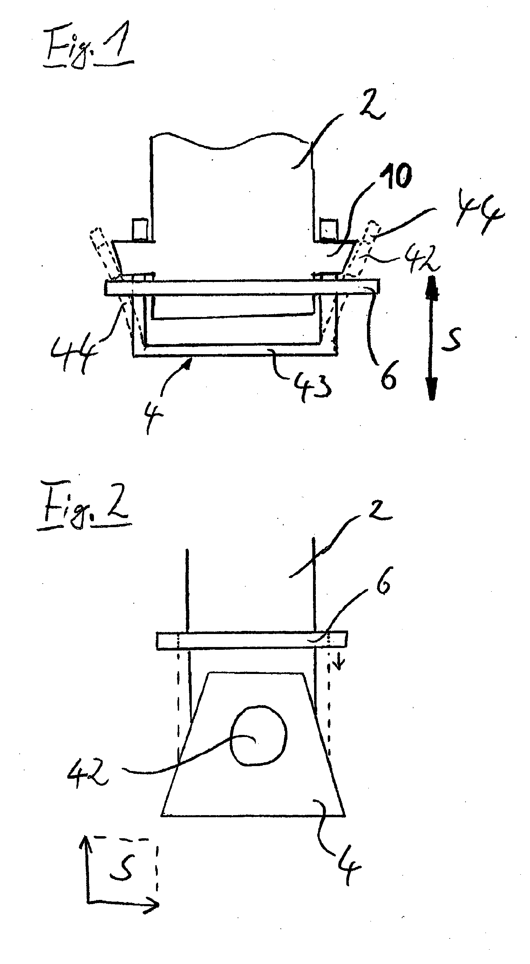

In Fig. 1 ist eine Ansicht längs der Schwenkebene S auf eine bevorzugte Ausführungsform der erfindungsgemäßen Stützvorrichtung gezeigt. Die Stützvorrichtung umfasst dabei eine Fußeinheit 4, ein Sicherungselement 6 und ein erstes Stützelement 2. Die Fußeinheit 4 weist an ihrer Unterseite einen Basisbereich 43 und an ihren jeweils zwei außen liegenden Seiten zwei Wandbereiche 44 auf. Gestrichelt ist der mögliche verformte Zustand der Wandbereiche 44 dargestellt, bei welchen die freien Enden der Wandbereiche 44, in der Figur oben liegend dargestellt, derart voneinander beabstandet werden, dass die Wandbereiche 44 auf Höhe des Tragelementes 10 einen größeren Abstand voneinander aufweisen, als die Erstreckung des Tragelementes 10 bzw. der Abstand der beiden freien Enden der Tragelemente 10 voneinander beträgt. Bei einem bevorzugten Verfahren zur Herstellung einer Stützvorrichtung werden die beiden Wandbereiche 44, wie gestrichelt dargestellt, voneinander beabstandet, anschließend das Stützelement bzw. das Tragelement zwischen den beiden Wandbereichen angeordnet und anschließend die Kraft, welche die beiden Wandbereiche elastisch verformt hat, nicht weiter aufrecht erhalten, so dass eine Rückstellkraft die beiden Wandbereiche 44 wieder aufeinander zu bewegt, wobei die Aufnahmebereiche 42 formschlüssig in den Tragelementen 10 eingreifen. Nach Abschluss dieser Schritte kann das Sicherungselement 6 von dem Bild oben her in die in der Figur gezeigte Position gebracht werden und sichert so die beiden Wandbereiche 44 gegen die gestrichelt dargestellte Verformung. In der Figur dargestellt ist auch eine bevorzugte Anschrägung der Enden der Tragelemente 10, wobei diese Anschrägung, bzw. Anfasung bevorzugt das Positionieren der Tragelemente 10 oder des ersten Stützelementes 2 zwischen den Aufnahmebereichen 42 erleichtert. In der in der Figur gezeigten Einbauposition liegt das Sicherungselement 6 an einer dafür vorgesehenen Kante oder Fläche des Wandbereiches 44 bzw. beider Wandbereiche 44 an. Es wird in dieser Position von der Schwerkraft gehalten.

Fig. 2 zeigt eine Seitenansicht der in Fig. 1 gezeigten Ausführungsform, wobei das Sicherungselement 6 in der Position, bzw. dem Betriebszustand gezeigt wird, in welcher die Fußeinheit 4 mit dem Stützelement 2 bzw. den Tragelementen 10 verbunden werden kann. Diese erste Position des Sicherungselementes 6 ist dadurch gekennzeichnet, dass es sich oberhalb der Oberkante der Wandbereiche 44 befindet. In der Figur zu erkennen ist auch die bevorzugte Form der Aufnahmebereiche 42, die in vorteilhafter Weise kreisförmig ausgeführt ist. Mit den beiden gestrichelten Linien am Sicherungselement 6 sind die Innenkanten bzw. Innenflächen der Aussparung des Sicherungselementes 6 dargestellt, welche der gestrichelten Linie nach unten hin folgend schließlich an den Außenflächen der Wandbereiche 44 zum Anliegen kommen. In der Figur dargestellt ist auch die besonders bevorzugte Ausführung der Wandbereiche 44, deren Querschnitt bzw. die in der Figur gezeigte Breite von oben nach unten hin zunimmt, so dass durch diese Querschnittvergrößerung das Sicherungselement 6 in einer bestimmten Höhe an der Fußeinheit 4 zum Anliegen kommt. Neben der dargestellten trapezförmigen Ausgestaltung der Wandbereiche 44 kann insbesondere auch eine rechteckige, stufenförmig an Breite zunehmende Geometrie der Wandbereiche bevorzugt sein.

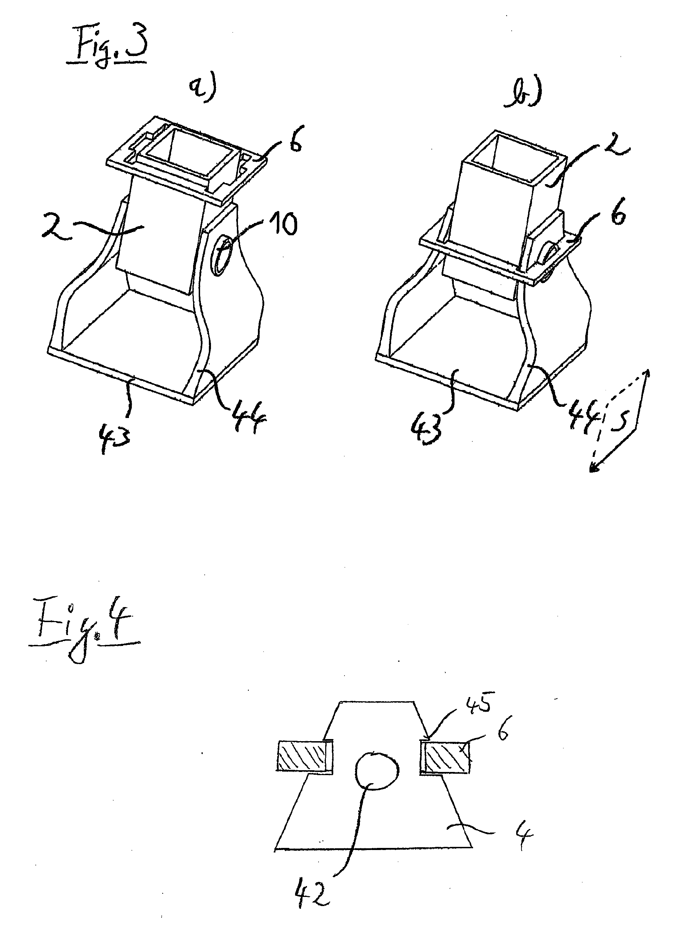

In Fig. 3a) ist eine bevorzugte Ausführungsform der erfindungsgemäßen Stützvorrichtung perspektivisch gezeigt, bei der das Sicherungselement 6 in seiner ersten Position oberhalb der Wandbereiche 44 der Fußeinheit 4 angeordnet ist. Weiterhin deutlich zu erkennen ist die geschwungene Ausführung der Wandbereiche 44, welche besonders eine Verformung der freien Enden der Wandbereiche 44 quer zur Schwenkebene S vereinfacht. "Vereinfacht" bedeutet an dieser Stelle insbesondere, dass eine geringere Kraft zum Verbiegen der Wandbereiche 44 aufgebracht werden muss und die benötigte Vergrößerung des Abstandes der freien, oberen Enden der beiden Wandbereiche 44 zueinander leichter hergestellt werden kann. Weiterhin ist bevorzugt, dass mittels dieser Konfiguration der Basisbereich 43 der Fußeinheit 4, unter Beibehaltung des Abstandes der freien Enden der Wandbereiche 44 voneinander, beliebig breit gestaltet werden kann und so beispielsweise für besonders unebenen oder besonders nachgiebigen bzw. weichen Untergrund geeignet ist. Es kann insbesondere auch bevorzugt sein, dass die beiden Wandbereiche 44 über ein Scharnier mit dem Basisbereich 43 verbunden sind und so keine größere Kraft zum Vergrößern des Abstandes der freien Enden der Wandbereiche 44 voneinander notwendig ist, wobei bei dieser Konfiguration allein das Sicherungselement 6 die Sicherung der Wandbereiche 44 übernimmt.

Bei der in Fig. 3b) gezeigten bevorzugten Ausführungsform ist das Sicherungselement 6 hin zum Basisbereich 43 verlagert, wobei es das erste Stützelement 2, das Tragelement 10 und den Wandbereich 44 bzw. die beiden Wandbereiche 44 der Fußeinheit 4 umfasst. In dieser Einbauposition verhindert das Sicherungselement 6 zum einen, dass sich der Abstand der freien Enden der beiden Wandbereiche 44 voneinander vergrößert, zum andern verhindert es auch das Herausrutschen oder seitliche Verlagern des Tragelementes 10 quer zur Schwenkebene S. Bevorzugt kann das Sicherungselement 6 in dieser Einbauposition mittels eines Schweißpunktes z.B. am Stützelement 2 an einem oder beiden Wandbereichen 44 oder am Tragelement 10 festgelegt werden. Insbesondere bevorzugt ist aber die Konfiguration, dass die Verbindung zwischen Fußeinheit 4 und Stützelement 2 über das Tragelement 10 und das Sicherungselement 6 eine lösbare Verbindung verbleibt.

In Fig. 4 ist eine bevorzugte Ausführungsform der Fußeinheit 4 gezeigt. Dabei ist insbesondere an den Wandbereichen 44 eine Kombination aus Vor- und Rücksprüngen vorgesehen, in welche das Sicherungselement 6 einrasten kann. Bei dieser bevorzugten Ausführungsform wird das Sicherungselement also nicht mehr allein durch die Schwerkraft nach unten gehalten, sondern auch durch die Eingriffsmittel 45, wie z. B. der in der Figur gezeigte Vorsprung, welcher als Eingriffsmittel dient.

### Bezugszeichenliste:

- 2 -: erstes Stützelement
- 4 -: Fußeinheit
- 6 -: Sicherungselement
- 10 -: Tragelement
- 42 -: Aufnahmebereich
- 43 -: Basisbereich
- 44 -: Wandbereich
- 45 -: Verriegelungsmittel
- S -: Schwenkebene

## Patentansprüche

1. Stützvorrichtung für Nutzfahrzeuge umfassend
ein erstes Stützelement (2), eine Fußeinheit (4), ein Sicherungselement (6) und ein Tragelement (10),
wobei die Fußeinheit (4) einen Aufnahmebereich (42) aufweist,
wobei das Tragelement (10) an dem Stützelement (2) festlegbar oder festgelegt ist, und
wobei das Tragelement (10) zumindest teilweise in den Aufnahmebereich (42) einführbar und lagerbar ist,
**dadurch gekennzeichnet dass** das Sicherungselement (6) eine Aussparung aufweist, mit der es über das erste Stützelement (2) schiebbar und entlang des ersten Stützelements (2) verlagerbar ist, so dass ein Betriebszustand des Sicherungselements (6) einstellbar ist, in welchem es die Fußeinheit (4) und das erste Stützelement (2) umfasst bzw. umgibt.

2. Stützvorrichtung nach Anspruch 1,
wobei die Fußeinheit (4) einen sich im Wesentlichen quer zu einer Schwenkebene (S) erstreckenden Basisbereich (43) und einen sich im Wesentlichen in der Schwenkebene (S) erstreckenden Wandbereich (44) aufweist,
wobei der Wandbereich (44) mit einem ersten Ende am Basisbereich (43) festlegbar ist, und
wobei ein, dem ersten Ende gegenüberliegendes, freies Ende des Wandbereiches (44) relativ zum ersten Ende, quer zur Schwenkebene (S) verlagerbar ist, so dass der am Wandbereich (44) angeordnete Aufnahmebereich (42) mit dem Tragelement (10) in Eingriff bringbar ist.

3. Stützvorrichtung nach Anspruch 2,
wobei das Sicherungselement (6) eine Aussparung aufweist, deren Geometrie zumindest bereichsweise kongruent zur Querschnittsgeometrie des Verbundes aus erstem Stützelement (2) und/oder Tragelement (10) und/oder Wandbereich (44) der Fußeinheit (4) ist,
wobei das Sicherungselement (6) entlang des ersten Stützelements (2) verlagerbar ist, bis es an einer dafür vorgesehenen Körperkante oder -fläche an dem Tragelement (10) und/oder der Fußeinheit (4) zum Anliegen kommt.

4. Stützvorrichtung nach einem der Ansprüche 2 bis 3,
wobei der Aufnahmebereich (42) der Fußeinheit (4) eine Aussparung oder ein Rücksprung ist, der quer zur Schwenkebene (S) in den Wandbereich (44) eingebracht ist.

5. Stützvorrichtung nach einem der Ansprüche 2 bis 4,
wobei das erste Stützelement (2) an zwei gegenüberliegenden Seiten je ein Tragelement (10) aufweist, und
wobei die Tragelemente (10) kollinear zueinander ausgerichtet sind und sich im Wesentlichen quer zur Schwenkebene (S) erstrecken.

6. Stützvorrichtung nach einem der Ansprüche 2 bis 5,
wobei das Sicherungselement (6) die Wandbereiche (44) der Fußeinheit (4) mittels eines Formschlusses gegen voneinander wegweisende Verlagerung sichert.

7. Stützvorrichtung nach einem der Ansprüche 2 bis 6,
wobei die Fußeinheit (4) zwei Wandbereiche (44) aufweist, die im Wesentlichen parallel zueinander angeordnet sind, und
wobei die Aufnahmebereiche (42) der Wandbereiche (44) kollinear zueinander ausgerichtet sind und in den gegenüberliegenden Enden eines Tragelements (10) oder jeweils zweier kollinear angeordneter Tragelemente (10) eingreifen.

8. Stützvorrichtung nach einem der vorhergehenden Ansprüche,
wobei die Fußeinheit (4) ein oder eine Vielzahl von Verriegelungsmitteln (45) aufweist, die das Sicherungselement (6) gegen Verlagerung relativ zur Fußeinheit (4) sichern.

9. Verfahren zur Herstellung einer Stützvorrichtung, umfassend die Schritte:
a) Bereitstellen eines ersten Stützelements (2), einer Fußeinheit (4) und eines oder zweier Tragelemente (10),
b) Einführen und/oder Festlegen eines oder zweier Tragelemente (10) in das, bzw. am ersten Stützelement (2),
c) Vergrößern des Abstandes der freien Enden zweier an der Fußeinheit (4) vorgesehener Wandbereiche (44) zueinander, Positionieren des Stützelements (2) zwischen den Wandbereichen (44) und Anordnen von Aufnahmebereichen (42) der Wandbereiche (44) kollinear zu den Enden des einen oder der zwei Tragelemente (10),
d) Verringern des Abstandes der freien Enden der Wandbereiche (44) zueinander, so dass die Aufnahmebereiche (42) mit den Tragelementen (10) in Eingriff gelangen und die Wandbereiche (44) der Fußeinheit (4) gegen Verlagerung relativ zum ersten Stützelement (2) sichern, und
e) Bereitstellen eines Sicherungselements (6), das eine Aussparung aufweist, mit der es über das erste-Stützelement (2) geschoben und entlang des ersten Stützelements (2) verlagert ist, so dass ein Betriebszustand des Sicherungselements (6) eingestellt ist, in welchem es die Fußeinheit (4) und das erste Stützelement (2) umfasst bzw. umgibt.

10. Verfahren nach Anspruch 9,
wobei vor dem Festlegen des einen oder der zwei Tragelemente (10) das erste Stützelement (2) in die Aussparung am Sicherungselement (6) eingeführt wird und das Sicherungselement (6) längs des ersten Stützelements (2) so weit verlagert wird, bis die Aufnahmebereiche (42) der Wandbereiche (44) an dem oder den Tragelementen (10) festlegbar sind,
und
wobei nach dem Verringern des Abstandes der Wandbereiche (44) zueinander das Sicherungselement (6) hin zur Fußeinheit (4) verlagert wird, bis es an der Fußeinheit (4) und/oder dem Tragelement (10) zum Anliegen kommt.

## Claims

1. Support device for commercial vehicles, comprising
a first support element (2), a foot unit (4), a securing element (6) and a carrier element (10),
wherein the foot unit (4) comprises a receiving portion (42),
wherein the carrier element (10) may be fixed at or is fixed at the support element (2), and
wherein the carrier element (10) may at least partially be inserted and supported in the receiving portion (42),
**characterized in that** the securing element (6) comprises a cavity, by means of which it may be moved over the first support element (2) and displaced along the first support element (2) so that an operational state of the securing element (6) may be set, in which it encompasses or surrounds the foot unit (4) and the first support element (2).

2. The support device of claim 1,
wherein the foot unit (4) comprises a base portion (43), which extends essentially transverse to a swivel plane (S), and a wall portion (44), which extends essentially in the swivel plane (S),
wherein the wall portion (44) may be fixed to the base portion (43) with a first end, and
wherein a free end of the wall portion (44), which is opposite the first end, is displaceable relative to the first end, transverse to the swivel plane (S), so that the receiving portion (42), which is arranged at the wall portion (44), may be brought into engagement with the carrier element (10).

3. The support device of claim 2,
wherein the securing element (6) has a cavity, whose geometry at least over a certain area is congruent to the cross-sectional geometry of the compound of first support element (2) and/or carrier element (10) and/or wall portion (44) of the foot unit (4),
wherein the securing element (6) is displaceable along the first support element (2) until it comes to rest against a body edge or surface provided therefor at the carrier element (10) and/or the foot unit (4).

4. The support device of any one of claims 2 to 3,
wherein the receiving portion (42) of the foot unit (4) is a cavity or recess, which is introduced into the wall portion (44) transverse to the swivel plane (S).

5. The support device of any one of claims 2 to 4,
wherein the first support element (2) has a respective carrier element (10) at two opposite sides, and
wherein the carrier elements (10) are directed collinearly relative to one another and extend essentially transverse to the swivel plane (S).

6. The support device of any one of claims 2 to 5,
wherein by means of a positive fit or form fit the securing element (6) secures the wall portions (44) of the foot unit (4) against displacement facing away from each other.

7. The support device of any one of claims 2 to 6,
wherein the foot unit (4) comprises two wall portions (44), which are arranged essentially parallel to one another, and
wherein the receiving portions (42) of the wall portions (44) are directed collinearly relative to one another and engage the opposite ends of a carrier element (10) or two respective collinearly arranged carrier elements (10).

8. The support device of any one of the preceding claims,
wherein the foot unit (4) comprises one or a plurality of locking means (45), which secure the securing element (6) against displacement relative to the foot unit (4).

9. A method of producing a support device, comprising the following steps:
a) providing a first support element (2), a foot unit (4) and one or two carrier element(s) (10),
b) introducing and/or fixing one or two carrier element(s) (10) in or at the first support element (2),
c) increasing the distance between the free ends of two wall portions (44) provided at the foot unit (4), positioning the support element (2) between the wall portions (44) and arranging receiving portions (42) of the wall portions (44) collinearly to the ends of the one or the two carrier element(s) (10),
d) reducing the distance between the free ends of the wall portions (44) so that the receiving portions (42) come into engagement with the carrier elements (10) and secure the wall portions (44) of the foot unit (4) against displacement relative to the first support element (2), and
e) providing a securing element (6), which comprises a cavity, by means of which it is moved over the first support element (2) and displaced along the first support element (2) so that an operational state of the securing element (6) is set, in which it encompasses or surrounds the foot unit (4) and the first support element (2).

10. The method of claim 9,
wherein, before the one or the two carrier element(s) (10) is/are fixed, the first support element (2) is introduced into the cavity at the securing element (6) and the securing element (6) is displaced along the first support element (2) so far that the receiving portions (42) of the wall portions (44) may be fixed at the carrier element(s) (10), and
wherein, after the distance between the wall portions (44) has been reduced, the securing element (6) is displaced towards the foot unit (4) until it comes to rest against the foot unit (4) and/or the carrier element (10).

## Revendications

1. Dispositif d'appui pour véhicules utilitaires, comprenant
un premier élément d'appui (2), une unité formant pied (4), un élément de blocage (6) et un élément porteur (10),
dans lequel l'unité formant pied (4) comporte une zone réceptrice (42),
dans lequel l'élément porteur (10) est immobilisé ou susceptible d'être immobilisé sur l'élément d'appui (2), et
dans lequel l'élément porteur (10) est susceptible d'être introduit et d'être monté au moins partiellement dans la zone réceptrice (42), et
**caractérisé en ce que** l'élément de blocage (6) comporte un évidement au moyen duquel il peut être poussé au-dessus du premier élément d'appui (2) et déplaçable le long de l'élément d'appui (2), de sorte qu'il peut s'établir un état de service de l'élément de blocage (6) dans lequel il enserre ou il entoure l'unité formant pied (4) et le premier élément d'appui (2).

2. Dispositif d'appui selon la revendication 1,
dans lequel l'unité formant pied (4) comprend une zone de base (43) s'étendant sensiblement perpendiculairement à un plan de pivotement (S) et une zone de paroi (44) s'étendant sensiblement dans le plan de pivotement (S),
dans lequel la zone de paroi (44) est susceptible d'être immobilisée avec une première extrémité sur la zone de base (43), et
dans lequel une extrémité libre, opposée à la première extrémité, de la zone de paroi (44) est déplaçable par rapport à la première extrémité perpendiculairement au plan de pivotement (S) de sorte que la zone réceptrice (42) agencée sur la zone de paroi (44) est susceptible d'être amenée en engagement avec l'élément porteur (10).

3. Dispositif d'appui selon la revendication 2,
dans lequel l'élément de blocage (6) comporte un évidement dont la géométrie est au moins localement congruente de la géométrie de section transversale de l'ensemble formé par le premier élément d'appui (2) et/ou l'élément porteur (10) et/ou la zone de paroi (44) de l'unité formant pied (4),
dans lequel l'élément de blocage (6) est déplaçable le long du premier élément d'appui (2) jusqu'à ce qu'il vienne s'appliquer sur une arête ou une surface corporelle prévue à cet effet sur l'élément porteur (10) et/ou l'unité formant pied (4).

4. Dispositif d'appui selon l'une des revendications 2 et 3,
dans lequel la zone réceptrice (42) de l'unité formant pied (4) est un évidement ou un ressaut, qui est ménagé perpendiculairement au plan de pivotement (S) dans la zone de paroi (44).

5. Dispositif d'appui selon l'une des revendications 2 à 4,
dans lequel le premier élément d'appui (2) comprend un élément porteur (10) respectif sur deux côtés opposés, et
dans lequel les éléments porteurs (10) sont orientés de façon colinéaire l'un par rapport à l'autre et s'étendent sensiblement perpendiculairement au plan de pivotement (S).

6. Dispositif d'appui selon l'une des revendications 2 à 5,
dans lequel l'élément de blocage (6) bloque les zones de paroi (44) de l'unité formant pied (4) au moyen d'une coopération de formes à l'encontre d'un déplacement en éloignement l'une de l'autre.

7. Dispositif d'appui selon l'une des revendications 2 à 6,
dans lequel l'unité formant pied (4) comprend deux zones de paroi (44) qui sont agencées sensiblement parallèlement l'une à l'autre, et
dans lequel les zones réceptrices (42) des zones de paroi (44) sont orientées de façon colinéaire l'une par rapport à l'autre et s'engagent dans les extrémités opposées d'un élément porteur (10) ou respectivement de deux éléments porteurs (10) agencés de façon colinéaire.

8. Dispositif d'appui selon l'une des revendications précédentes,
dans lequel l'unité formant pied (4) comprend un moyen de verrouillage (45) ou une pluralité de moyens de verrouillage, qui bloquent l'élément de blocage (6) à l'encontre d'un déplacement par rapport à l'unité formant pied (4).

9. Procédé pour réaliser un dispositif d'appui, comprenant les étapes consistant à :
a) fournir un premier élément d'appui (2), une unité formant pied (4) et un ou deux élément(s) porteur(s) (10),
b) introduire et/ou immobiliser un ou deux élément(s) porteur(s) (10) dans ou sur le premier élément d'appui (2),
c) agrandir la distance des extrémités libres de deux zones de paroi (44) ménagées sur l'unité formant pied (4) l'une par rapport à l'autre, positionner l'élément d'appui (2) entre les zones de paroi (44) et agencer des zones réceptrices (42) des zones de paroi (44) de façon colinéaire aux extrémités de l'élément porteur ou des deux éléments porteurs (10),
d) réduire la distance des extrémités libres des zones de paroi (44) l'une par rapport à l'autre, de sorte que les zones réceptrices (42) viennent en engagement avec les éléments porteurs (10) et bloquent les zones de paroi (44) de l'unité de pied (44) à l'encontre d'un déplacement par rapport au premier élément d'appui (2), et
e) fournir un élément de blocage (6), qui présente un évidement au moyen duquel il est poussé par-dessus le premier élément d'appui (2) et déplacé le long du premier élément d'appui (2) de telle manière que l'on établit un état de service de l'élément de blocage (6) dans lequel il enserre ou il entoure l'unité formant pied (4) et le premier élément d'appui (2).

10. Procédé selon la revendication 9,
dans lequel avant d'immobiliser l'élément porteur ou les deux éléments porteurs (10), on introduit le premier élément d'appui (2) dans l'évidement sur l'élément de blocage (6), et l'on déplace l'élément de blocage (6) le long du premier élément d'appui (2) aussi loin que les zones réceptrices (42) des zones de paroi (44) sont susceptibles d'être immobilisées sur l'élément porteur ou sur les éléments porteurs (10), et
dans lequel après réduction de la distance des zones de paroi (44) l'une par rapport à l'autre, l'élément de blocage (6) est déplacé jusqu'à l'unité formant pied (4) jusqu'à ce qu'il vienne en appui contre l'unité formant pied (4) et/ou contre l'élément porteur (10).
